# EUROPEAN PATENT SPECIFICATION

(11) **EP 3 081 104 B1**
(45) Date of publication and mention of the grant of the patent: **22.04.2020**
(21) Application number: 14869599.2
(22) Date of filing: 09.12.2014
(51) Int. Cl.: A41D 19/015, A41D 19/00, A41D 19/04, B29C 65/02, B29C 65/04, B29C 65/74, B29K 27/06, B29L 31/48

(54) **MANUFACTURING PROCESS FOR PVC DISPOSABLE GLOVES**
VERFAHREN ZUR HERSTELLUNG PVC-EINWEGHANDSCHUHE
PROCÉDÉ DE FABRICATION DE GANTS JETABLES EN PVC

(30) Priority: 10.12.2013 CN 201310669629; 10.12.2013 CN 201320806940 U; 10.12.2013 CN 201310666737; 10.12.2013 CN 201320807803 U
(43) Date of publication of application: 19.10.2016
(73) Proprietor: Tangshan Transocean Plastic Products. Ltd., Tangshan, Hebei 063500 (CN)
(72) Inventor: ZHANG, Zhentang, Tangshan Hebei Province 063500 (CN)
(74) Representative: Ström & Gulliksson AB
(86) International application number: PCT/CN2014/093395
(87) International publication number: WO 2015/085908

(56) References cited:
- CN-A- 1 729 882
- CN-A- 102 551 238
- CN-A- 102 964 719
- CN-A- 103 610 245
- CN-A- 103 720 089
- CN-U- 202 375 094
- CN-U- 203 266 977
- CN-U- 203 592 753
- CN-U- 203 650 963
- JP-A- S56 140 102
- US-A- 3 007 835
- US-A- 3 625 790
- US-A- 4 034 853
- US-A1- 2013 086 732

## Description

### Technological Field

The present invention relates to the field of disposable gloves, particularly, relates to PVC (polyvinyl chloride) related disposable gloves and its manufacturing process.

### Background

PVC related disposable glove is a widely used everyday product. PVC related disposable gloves refer to the disposable gloves that are made of a PVC resin mixture (a mixture of PVC resin and other materials) as the raw materials. The other materials refer to any plastic products that are compatible with PVC resin. When the mixing ratio of other materials is 0, the so called mixture becomes pure PVC resin, but in this text it is also referred as PVC related resin mixture. The disposable gloves made of the mixture of PVC resin and other compatible materials have equal or similar performances with the disposable gloves made of pure PVC resin.

PVC related disposable gloves have good properties in elasticity and strength. They are comfortable and convenient to use for hand protections, therefore are widely used in the fields of domestic usages, hospitals and food industries.

Currently the commonly applied traditional manufacturing process for the PVC related disposable gloves comprises the following steps:
Step 1. Mixing a PVC resin mixture with a plasticizer such as octyl phthalate (DOP) or diisononyl phthalate (DINP) or any other plasticizers to form a paste, and the purpose is to make the gloves soft.
Step 2. Adding large amount of viscosity modifier, a type of low aromatic solvent oil, into the paste mentioned above to make it thinner and become the diluted paste, in order to reduce the single glove weights.
Step 3. Pumping the diluted paste mentioned above into a dipping tank.
Step 4. Using a chain to drive multiple ceramic (or metal) stereoscopic glove formers into the dipping tank, so that the lower part of the glove formers is coated with a layer of diluted paste.
Step 5. Driving the glove formers with the chain into an oven for roasting, evaporating the viscosity modifier from the paste and making the layer of the diluted paste on the surface of the glove formers become a thin plastic film, and forming a film type glove according to the shape of glove formers.
Step 6. Chaining the glove formers with the formed gloves out of the oven for cooling down.
Step 7. Peeling the gloves on the glove former surfaces manually or automatically to pick up the formed gloves and counting and packing them.
Step 8. Driving the clean glove formers into the dipping tank again after the gloves being peeled, to make them go into the next production cycle.

The above conventional manufacturing process for the PVC related disposable gloves was invented in the United States at the beginning of the last century. It is a typical outdated manufacturing process with high pollution and high labor intensity. The industry of manufacturing PVC related disposable gloves migrated to the Mainland China from Taiwan in the 1980's and 1990's. Since then, about 98% of the production capacity of this industry worldwide has been relocated into China but the conventional manufacturing process has not been principally changed. The disadvantage of this conventional process is using large amounts of solvent oil as the viscosity modifier added into the paste of material mixture. The only purpose for adding the solvent oil as viscosity modifier is to make the paste thinner to reduce glove thicknesses and weights. The solvent oil viscosity modifier is completely evaporated in the oven and released into the atmosphere. This is the so called volatile organic compounds (VOC) which forms smog and causes serious air pollutions.

According to the actual production statistics, the average petroleum based volatile pollutants (VOC) is about 0.26 tons per every ton of PVC related disposable gloves made with the conventional process described above, which will go directly into the atmosphere as a pollutant. The annual production output of the PVC related disposable gloves is about 500 thousand tons, which means about 130 thousand tons of petroleum based volatile pollutants (VOC) emitted into the atmosphere every year in China. It is extremely difficult and financially impossible to effectively recover these contaminants with the existing technologies. This pollutant is also very difficult to degrade in the atmosphere. It normally takes more than five years for their complete degradation. This petroleum based volatile pollutants (VOC) floating in the air reacts with sulfuric acid and nitric acid to form haze or smog and PM2.5 particles which cause great harm to human health. In China, wherever the PVC related disposable gloves factories are concentrated, the air qualities are all among the worst areas, where one of the pollution sources is the petroleum based volatile pollutants (VOC) from the manufacturing process of the PVC related disposable gloves.

At the same time, the solvent oil or viscosity modifier completely evaporated in the oven of this conventional manufacturing process of the PVC related disposable gloves represents nearly 20% the total cost of the gloves. The high-speed operation of the production line driven by the former chain makes the operators always work in a high intensive way. In the summer, the heat emission from the ovens makes the operators working in extremely harsh environment at the room temperature up to 50°C, and heatstroke occurs frequently among the operators.

This outdated manufacturing process for PVC related disposable gloves exists all over China this way without any principle changes till today, resulting in large amounts of pollutions and other series of disastrous consequences in the society. It is necessary to develop a new process with model technology to replace this old method for less pollution and other social benefits. Previous attempts at innovation in this field include US 4 034 853 A (SMITH BUFORD BRYAN), US 3 625 790 A (AYRES WELDON R), US 3 007 835 A (WALTER ROSENBERG ET AL), JP S56 140102 A (DANROTSUPU HOOMU PURODAKUTSU K; SUMITOMO RUBBER IND) that all include methods of heat sealing two plastic films together in the shape of a glove. US 4 034 853 A discloses a manufacturing process for PVC disposable gloves, wherein the process comprises the following steps: providing PVC films; placing two layers of films in parallel to form a glove material film; heating the glove material film along a path of the preset contour, the heating temperature being equal to or higher than the critical point of heat sealing temperature of the glove material film, and thus the glove material film is effectively heat sealed along the path of the preset contour; applying a pressure on the path of the preset contour so that the two layers of films of the glove material film are pressed and fused integrally along the path of the preset contour; forming a blade-shaped cut along outer edge of the path of the preset contour, and separating integrally fused part including fused path from the glove material film, and forming an opening at wrist position of the path of the preset contour, so as to form a PVC disposable glove.

### Summary of the Invention

The objective of the present invention is to provide a manufacturing process for PVC related disposable gloves, which can eliminate the air pollution and improve the working environment for the workers, and to reduce production costs of the PVC related disposable gloves.

The invention provides a manufacturing process for PVC related disposable gloves, which comprises the following steps:
mixing PVC resin or its mixture and a plasticizer to form a glove formula mixture 101;
making the glove formula mixture into a mixture film 102;
placing two layers of mixture films in parallel to form a glove material film 103;
placing an insulation layer on one side of the glove material film, and applying a beam of electromagnetic waves distributed along a path of preset contour onto the surface of the glove material film, to make the beam of electromagnetic waves penetrates the glove material film and thus the two layers of the glove material film is effectively sealed along the path of preset contour 104A; or heating the glove material film along a path of preset contour, the heating temperature being equal to or higher than the critical point of heat sealing temperature of the glove material film within 2 seconds, keeping the temperature for a period of time between 0.05 seconds and 5.0 seconds before stopping the heating, and thus the glove material film is effectively heat sealed along the path of preset contour 104B; applying a pressure on the path of preset contour so that the two layers of said mixture films of the glove material films are pressed and fused integrally along the path of preset contour 105;
forming a blade-shaped cut along outer edge of the path of preset contour, and separating integrally fused part including fused path from the glove material film, and forming an opening at wrist position of the path of preset contour, so as to form a PVC related disposable glove 106.

Preferably, while applying a pressure on the path of preset contour, preheating the glove material film to a temperature not exceeding 90°C.

Preferably, the step of making the glove formula mixture into a mixture film comprises making the glove material mixture into a mixture film by using rolling process, film blowing process or flow casting process.

Preferably, the process further comprises collecting plasticizer vapor produced in the process of making the glove formula mixture into a mixture film; cooling down the plasticizer vapor so as to form plasticizer droplets; recovering the plasticizer droplets by means of electrostatic precipitator.

Preferably, the step of applying the beam of electromagnetic waves onto the surface of the glove material film comprises: feeding the glove material film into the space between two electrodes, and applying a beam of electromagnetic waves with the frequencies of 27.12MHz or 40.68MHz between the two said electrodes, and one of the two said electrodes possess a shape corresponding to the path of the preset contour.

Whenever a beam of electromagnetic waves is applied on the surface of the glove material films, the step of applying pressure on said path of preset contour comprises: driving one of the two electrodes moves towards the other, and pressing the glove material film between the two electrodes.

When thermal heat is applied along a path of preset contour to the glove material films, the step of applying pressure on said path of preset contour comprises: allowing the glove material film to feed into the space between a stationary template and a moving template of a stamping mould, and one of the two templates is mounted with a metal mold with the path of preset contour; driving the moving template to move towards the stationary template so as to press the glove material film between the two templates.

Preferably, the step of separating the integrally fused part including fused path from the glove material films comprises: holding the glove material films in place, and applying a pressure or a tensile force vertically to the glove material film on the integrally fused part including fused path, so as to separate the integrally fused part including fused path from the glove material film.

Preferably, the process further comprises automatically counting the number of separated PVC related disposable gloves.

Preferably, said plasticizer includes dioctyl phthalate (DOP) and / or diisononyl phthalate (DINP) and / or dioctyl terephthalate (DOTP) and / or 1,2-cyclohexane dicarboxylic acid isononyl ester (DINCH). The said glove formula mixture includes 100 parts by weight of PVC resin or its mixture, and 50 parts by weight or more of the said plasticizers.

The present disclosure also provides PVC related disposable gloves, comprising two layers of the glove material films placed in parallel, produced by the manufacturing process for PVC related disposable gloves according to the above method. The PVC related disposable gloves have a fused seam which is throughout the entire edge of the gloves.

The manufacturing process of PVC related disposable glove in the above example of the present invention has the following beneficial effects:
First, the raw materials used in making the PVC related disposable gloves no longer contain any solvent oil as viscosity modifier, so that the solvent oil caused air pollution is completely avoided. If all the factories making the PVC related disposable gloves according to this technology, the annual reduction of solvent oil vapor (VOC) emissions to the atmosphere is about 130,000 tons in China, which is a vary valuable contribution to the pollution controls and environmental protection.
Second, about 2%-3% of the plasticizers such as DOP, DINP, DOTP or DINCH used in production of PVC related disposable gloves will produce a small amount of vapor, which could pollute air, at a high temperature about 200°C. Fortunately, these plasticizers vapors could be easily collected by using the electrostatic precipitators for catching the liquid plasticizer droplets formed by lowering the plasticizer vapor temperature. This further reduces the environment pollution to make it basically a pollution free process, and promotes the environmental protection value of this process.
Third, no solvent oil as viscosity modifier is used in this new process, so it can sizably reduce production costs of the PVC related disposable gloves. In addition, the plasticizer vapor recovery can also further reduce the production costs of the PVC related disposable gloves.
Fourth, the energy consumption is greatly reduced with this new process because no oven is needed anymore for heating up the ceramic formers and gloves. And the pollution caused by the energy consumption is also reduced.
Fifth, this new process improves the working environment for the production workers, because it does not use a big oven for heating purpose so the shop temperature is not high, and also there is no evaporation of the viscosity modifier to cause room air pollution.
Sixth, this new process reduces the labor intensity of the operators because it is unnecessary to remove the PVC related disposable gloves manually from the formers.
Seventh, the glove material films are preheated to a temperature not exceeding 90°C to help the seams firmly fused to get higher strength of the finished products.
Eighth, an insulation layer is placed between the glove material films and electrode to prevent sparks caused by the high-frequency electromagnetic wave transmission process in order to avoid damaging the palm molds and affecting the product quality; it can prevent the glove material films from high temperature decomposition and save heat energy since the instantaneous heating time of the glove material films is short. For example, the instantaneous heating time is about two seconds if the thickness of the glove material films is 0.06 mm.
Ninth, the said PVC related disposable gloves separated from the glove material films are counted automatically to make it easy for the following step of glove packaging for a certain number.

### Brief Description of the Drawing

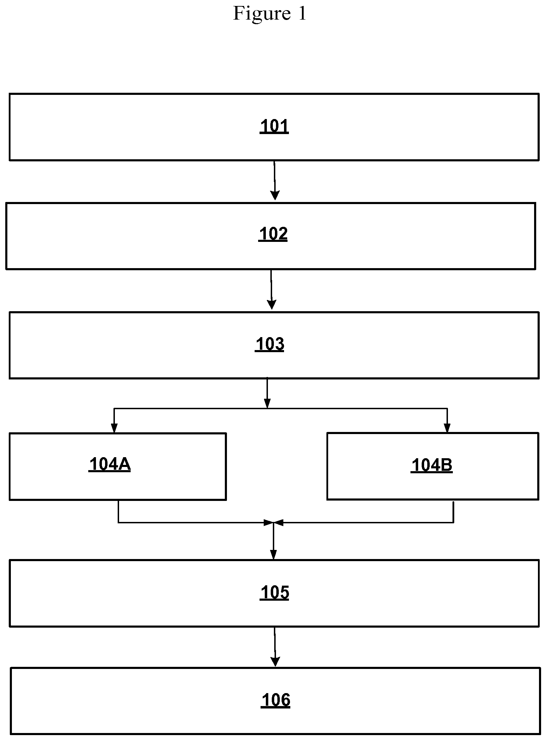

FIG. 1 is a flowchart of manufacturing process for PVC related disposable gloves in an example of the present invention.

### Detailed Description of the Embodiments

The present invention is further described in details with the following specific embodiment and the figure.

As shown in Figure 1, the manufacturing process for PVC related disposable gloves in the example of the present invention comprises the following steps:
Step 101, mixing the PVC resin or its mixture and a plasticizer to form a glove formula mixture.
Step 102, making the glove formula mixture into a mixture film.
Step 103, placing two layers of mixture films in parallel to form a glove material film.
Step 104A, placing an insulation layer on one side of the glove material film, and applying a beam of electromagnetic waves distributed along a path of preset contour onto the surface of the glove material film, to make the beam of electromagnetic waves penetrates the glove material film and thus the glove material film is effectively sealed along the path of preset contour; or
Step 104B, heating the glove material film along a path of preset contour, the heating temperature being equal to or higher than the critical point of heat sealing temperature of the glove material film, and thus the glove material film is effectively heat sealed along the path of preset contour.
Step 105, applying a pressure on the path of preset contour so that the two layers of said mixture films of the glove material film are pressed and fused integrally along the path of preset contour.
Step 106, forming a blade-shaped cut along outer edge of the path of preset contour, and separating integrally fused part including fused path from the glove material film, and forming an opening at wrist position of the path of preset contour, so as to form a PVC related disposable glove.

The said PVC related disposable gloves with the path of preset contour as the glove edge can be made after the above steps.

As described above, the PVC related disposable gloves made with this new process comprise two layers of the glove material films placed in parallel. The two layers of the glove material films are fused and sealed together by applying a beam of electromagnetic waves along the path of preset contour to the glove material films, or by heating to or above the critical temperature of the glove material films, so that a fused seam throughout the entire edge of the glove is formed.

The said new glove manufacturing process has the following beneficial effects:
First, the raw materials used in making the PVC related disposable gloves no longer contain any solvent oil as viscosity modifier, so that the solvent oil caused air pollution is completely avoided. If all the factories making the PVC related disposable gloves according to this technology, the annual reduction of solvent oil vapor (VOC) emissions to the atmosphere is about 130,000 tons in China, which is a vary valuable contribution to the pollution controls and environmental protection.
Second, about 2%-3% of the plasticizers such as DOP, DINP, DOTP or DINCH used in production of PVC related disposable gloves will produce a small amount of vapor which could pollute air, at a high temperature about 200°C. Fortunately, these plasticizers vapors could be easily collected by using the electrostatic precipitator for catching the liquid plasticizer droplets formed by lowering the plasticizer vapor temperature. This makes it basically a pollution free process, further reduces the environment pollution and promotes the environmental protection value of this process.
Third, no solvent oil as viscosity modifier is used in this new process, so it can sizably reduce production costs of the PVC related disposable gloves. In addition, the plasticizer vapor recovery can also further reduce the production costs of the PVC related disposable gloves.

In Step 101, the said plasticizers could be any existing plasticizers, including dioctyl phthalate (DOP) and / or diisononyl phthalate (DINP) and / or dioctyl terephthalate (DOTP) and / or 1,2-cyclohexane dicarboxylic acid isononyl ester (DINCH).

The said glove formula mixture includes 100 parts by weight of PVC resin or its mixture, and 50 parts by weight or more of the said plasticizers. The gloves made with said formula persist suitable softness and are easy to be used.

The method of separating the PVC related disposable gloves and the glove material films comprises holding the glove material films in place, and applying a pressure or a tensile force vertical to the glove material film on the inner part of the preset contour including the fused path, to separate it from other part of the glove material films.

The separated PVC related disposable gloves can be counted automatically to make it easy for the following step of glove packaging for a certain number in order to reduce the working intensity of the workers and raise the production efficiency.

In step 102, the mixture film made from the glove formula mixture can be formed with any existing method, such as rolling process, film blowing process or flow casting process.

In addition, the plasticizer used in the process can be evaporated during the step of making the glove formula mixture into a mixture film, and this part of vapor would also pollute air but can be completely collected with the following method:
collecting the plasticizer vapor produced in the process of making the glove formula mixture into a mixture film;
cooling down the plasticizer vapor so as to form plasticizer droplets;
recovering the plasticizer droplets by means of electrostatic precipitator.

The evaporated plasticizer can be completely recovered by the above method and can be used as the recycled material for making new PVC related disposable gloves in order to save production costs and reduce pollution.

In step 104A, an insulation layer is placed on one side of the glove material film to prevent sparks caused by the high-frequency electromagnetic wave transmission process in order to avoid damaging to the palm molds and affecting the product quality.

Also in step 104A, the methods of applying the high frequency electromagnetic wave can be in any ways, for example, including the following way:
the glove material films are fed into the space between two electrodes, and a beam of electromagnetic waves is applied between the two electrodes. The frequencies of the electromagnetic waves can be in any values, as long as the glove material films can be fused and sealed effectively, such as the frequencies of 27.12MHz or 40.68MHz in industrial standards.

In step 104B, the ranges of heating temperature are relevant to the formula of the glove material films. For some specific glove material films, the two layers of the glove material films can be jointed effectively when the heating temperature reaches 80°C, which is the critical temperature of the said glove material films.

In step 104B, heating the glove material film along a path of preset contour comprises: heating the glove material film on the path of preset contour to a temperature equal to or higher than the critical point of heat sealing temperature of the glove material films within 2 seconds, keeping the temperature for a period of time between 0.05 seconds and 5.0 seconds before stopping the heating.

In step 105, the method of applying pressure on said path of preset contour can be in any ways, for example, including the way that one of the two templates possesses the shape corresponding to the path of preset contour, which can be determined according to the product shapes.

Then one of the two templates moves towards the other one, and press the glove material films between the two templates.

For example, in step 105, the way of applying pressure on the path of preset contour comprises that the glove material films are allowed to feed into the space between a stationary template and a moving template of a stamping mould, and one of the two templates is mounted with a metal mold with the path of preset contour; the moving template is driven to move towards the stationary template so as to press the glove material films between the two templates.

Also, while applying a pressure to the glove material films along the path of preset contour, the glove material films can be preheated to a temperature not exceeding 90°C. Proper preheating helps to firmly fuse and raise the strength of the finished products.

An embodiment example of the invention is illustrated with specific implementing equipment below.
1. The PVC resin power, which can be a pure PVC resin or a mixture of PVC resin with other materials, is mixed with a plasticizer such as DOP or DINP to form a paste of the glove formula mixture. No solvent oil as viscosity dodifier is needed to be added.
2. The said paste of the glove formula mixture is fed into a thin PVC film machine, which can be any type such as a calendaring, blowing, or casting type of machines for making the thin PVC films, to make the films of glove material mixture with certain thickness and softness.
3. A funnel-shaped oil vapor recovery unit is installed over the PVC film machine to capture the very small amount of the plasticizer vapor produced in the process of making the films of glove material mixture with the glove formula mixture.
4. The very small amount of plasticizer vapor captured in the above step is cooled down to generally within the range of 30-60°C, so that the plasticizer vapor forms oil droplets.
5. The plasticizer vapor cooled down in the above step is introduced into an electrostatic precipitator, and the oil droplets get some positive charges inside it. The oil droplets are adsorbed onto the negative electrode plates of the electrostatic precipitators, and flow down along the negative electrode plate to a plasticizer recovery barrel.
6A. The films of glove material mixture made in step 2 are fed into a forming machine of PVC related disposable gloves with high frequency electromagnetic waves in the way of two parallel layers, and passed through the space between the two electrodes of high frequency circuit that can open or close. A palm shaped non-ferrous metal mold is installed on the moving one of the two electrodes, which moves toward the stationary electrode periodically to make the two in close state so that the energy of the beam of electromagnetic waves penetrates the two layers of the films of glove material mixture along the palm shaped path of preset contour of the non-ferrous metal mold. This part of PVC polar polymer molecules are forced to oscillate with the frequency of high frequency circuit, so as to produce internal friction heat to melt. Simultaneously, the glove material films are preheated to not exceeding 90°C and certain pressure are applied to make the two layers of the films of glove material mixture to be pressed and fused together according to the palm shape. Then said PVC related disposable gloves are formed, or
6B. Thermal heat is applied along a palm shaped mold, and the heating temperature is equal to or higher than the critical point of heat sealing temperature of the glove material films. A mechanical force is also applied to the metal mold to help the two layers of the mixture thin films sealing together. Then said PVC related disposable gloves are formed.
7. The said PVC disposable gloves obtained by the above-described process can not be separated completely from the surrounding glove material films (scrap materials). In order to avoid the high labor intensity and costs and low production efficiencies with manual separations, the connecting gloves and their scrap materials are fed into an automatic separator, and the parts of scrap materials are held by mould firstly, and then gloves and scrap materials are completely separated by pushing the palm shaped separator, which makes the separated gloves fall into a glove receiving box, and the scrap materials are rolled up for being recycled to make new PVC disposable gloves after re-melted.
8. An infrared counter is installed on the rotating shaft of the automatic glove separator applied in the above-described process, which counts once whenever the PVC disposable gloves are separated each time. When the separated PVC disposable gloves reach certain numbers, the piled gloves automatically fall onto the belt beneath the box which moves a certain distance.
9. The PVC disposable gloves counted and separated with certain numbers in the above-described process are transported to an automatic packaging machine and packed in carton boxes following the customer's requirements for storages.

## Claims

1. A manufacturing process for PVC related disposable gloves, wherein the process comprises the following steps:
mixing PVC resin or its mixture and a plasticizer to form a glove formula mixture (101);
making the glove formula mixture into a mixture film (102);
placing two layers of mixture films in parallel to form a glove material film (103);
placing an insulation layer on one side of the glove material film, and applying a beam of electromagnetic waves distributed along a path of a preset contour onto the surface of the glove material film, to make the beam of electromagnetic waves penetrating the glove material film and thus the glove material film is effectively sealed along the path of the preset contour (104A); or heating the glove material film along a path of the preset contour, the heating temperature being equal to or higher than the critical point of heat sealing temperature of the glove material film, and thus the glove material film is effectively heat sealed along the path of the preset contour (104B);
applying a pressure on the path of the preset contour so that the two layers of said mixture films of the glove material film are pressed and fused integrally along the path of the preset contour (105);
forming a blade-shaped cut along outer edge of the path of the preset contour, and separating integrally fused part including fused path from the glove material film, and forming an opening at wrist position of the path of the preset contour, so as to form a PVC related disposable glove (106);
the step of heating the glove material film along the path of the preset contour (104B) comprising:
heating the glove material film on the path of the preset contour to a temperature equal to or higher than the critical point of heat sealing temperature of the glove material film within 2 seconds, keeping the temperature for a period of time between 0.05 seconds and 5.0 seconds before stopping the heating.

2. The manufacturing process for PVC related disposable gloves according to claim 1, wherein while applying a pressure on the path of the preset contour, preheating the glove material film to a temperature not exceeding 90°C.

3. The manufacturing process for PVC related disposable gloves according to claim 1, wherein the step of making the glove formula mixture into a mixture film comprises making the glove material mixture into a mixture film by using rolling process, film blowing process or flow casting process.

4. The manufacturing process for PVC related disposable gloves according to claim 1, wherein the process further comprises:
collecting plasticizer vapor produced in the process of making the glove formula mixture into a mixture film;
cooling down the plasticizer vapor so as to form plasticizer droplets;
recovering the plasticizer droplets by means of electrostatic precipitator.

5. The manufacturing process for PVC related disposable gloves according to claim 1, wherein the step of applying a beam of electromagnetic waves onto the surface of the glove material film comprises:
feeding the glove material film into the space between two electrodes, and applying a beam of electromagnetic waves with the frequencies of 27.12MHz or 40.68MHz between the two said electrodes, and one of the two said electrodes possess a shape corresponding to the path of the preset contour.

6. The manufacturing process for PVC related disposable gloves according to claim 5, wherein the step of applying pressure on said path of preset contour comprises:
driving one of the two electrodes to move towards the other, and pressing the glove material film between the two electrodes.

7. The manufacturing process for PVC related disposable gloves according to claim 1, wherein the step of applying pressure on said path of the preset contour comprises:
allowing the glove material film to feed into the space between a stationary template and a moving template of a stamping mould, and one of the two templates is mounted with a metal mold with the path of the preset contour;
driving the moving template to move towards the stationary template so as to press the glove material film between the two templates.

8. The manufacturing process for PVC related disposable gloves according to claim 1, wherein the step of separating the integrally fused part including fused path from the glove material film comprises:
holding the glove material film in place, and applying a pressure or a tensile force vertically to the glove material film on the integrally fused part including fused path, so as to separate the integrally fused part including fused path from the glove material film.

9. The manufacturing process for PVC related disposable gloves according to claim 1, wherein the process further comprises:
counting the number of separated PVC related disposable gloves.

10. The manufacturing process for PVC related disposable gloves according to claim 1, wherein the plasticizer includes Dioctyl phthalate and / or diisononyl phthalate and / or dioctyl terephthalate and / or 1,2-cyclohexane dicarboxylic acid isononyl ester;
said glove formula mixture includes 100 parts by weight of PVC resin or its mixture, and 50 parts by weight or more of said plasticizers.

## Patentansprüche

1. Ein Herstellungsverfahren für PVC-bezogene Einweghandschuhe,
wobei der Prozess die folgenden Schritte umfasst:
Mischen von PVC-Harz oder seiner Mischung und eines Weichmachers zur Bildung einer Handschuhformel-Mischung (101);
Bringen der Handschuhformel-Mischung in einen Mischungsfilm (102);
Paralleles Anordnen von zwei Schichten von Mischungsfilmen zur Bildung eines Handschuhmaterial-Films (103);
Anordnen einer Isolationsschicht auf einer Seite des Handschuhmaterial-Films, und Anwenden eines Strahls elektromagnetischer Wellen, die entlang eines Wegs mit einer vorgegebenen Kontur auf der Oberfläche des Handschuhmaterial-Films verteilt werden, um den Strahl elektromagnetischer Wellen den Handschuhmaterial-Film durchdringen zu lassen und damit den Handschuhmaterial-Film entlang des Wegs mit der vorgegebenen Kontur (104A) wirksam abzudichten; oder Erwärmen des Handschuhmaterial-Films entlang eines Wegs mit der vorgegebenen Kontur, wobei die Heiztemperatur gleich oder höher ist als der kritische Punkt der Heißsiegeltemperatur des Handschuhmaterial-Films, so dass der Handschuhmaterial-Film entlang des Wegs mit der vorgegebenen Kontur (104B) effektiv heißgesiegelt ist;
Ausüben eines Drucks auf den Weg mit der vorgegebenen Kontur, so dass die zwei Schichten der genannten Mischungsfilme des Handschuhmaterial-Films entlang des Wegs mit der vorgegebenen Kontur (105) gepresst und integral verschmolzen sind;
Bilden eines klingenförmigen Schnitts entlang eines äußeren Rands des Wegs mit der vorgegebenen Kontur und Abtrennen eines integral verschmolzenen Teils, einschließlich des verschmolzenem Wegs des Handschuhmaterial-Films, und Bilden einer Öffnung an einer Handgelenk-Position des Wegs mit der vorgegebenen Kontur, so dass ein PVC-bezogener Einweghandschuh (106) gebildet wird;
wobei der Schritt des Erwärmens des Handschuhmaterial-Films entlang des Wegs mit der vorgegebenen Kontur (104B) umfasst: Erwärmen des Handschuhmaterial-Films auf dem Weg mit der vorgegebenen Kontur auf eine Temperatur, die gleich oder höher als der kritische Punkt der Heißsiegeltemperatur des Handschuhmaterial-Films ist, innerhalb von 2 Sekunden, Halten der Temperatur über eine Zeitspanne zwischen 0,05 Sekunden und 5,0 Sekunden vor dem Stoppen der Beheizung.

2. Herstellungsverfahren für PVC-bezogene Einweghandschuhe nach Anspruch 1, wobei beim Ausüben eines Drucks auf den Weg mit der vorgegebenen Kontur der Handschuhmaterial-Film auf eine Temperatur von nicht mehr als 90°C vorgewärmt wird.

3. Herstellungsverfahren für PVC-bezogene Einweghandschuhe nach Anspruch 1, wobei der Schritt des Bringens der Handschuhformel-Mischung in einen Mischungsfilm das Bringen der Handschuhmaterialmischung in einen Mischungsfilm unter Verwendung eines Walzverfahrens, Film-Blasverfahrens oder Fließgießverfahrens umfasst.

4. Herstellungsverfahren für PVC-bezogene Einweghandschuhe nach Anspruch 1, wobei das Verfahren ferner umfasst: Sammeln von Weichmacherdampf, der bei dem Bringen der Handschuhformel-Mischung in einen Mischungsfilm erzeugt wird; Abkühlen des Weichmacherdampfes, um Weichmachertröpfchen zu bilden; Rückgewinnen der Weichmachertröpfchen mittels eines elektrostatischen Abscheiders.

5. Herstellungsverfahren für PVC-bezogene Einweghandschuhe nach Anspruch 1, wobei der Schritt des Anlegens eines Strahls von elektromagnetischen Wellen auf die Oberfläche des Handschuhmaterial-Films umfaßt: Einführen des Handschuhmaterial-Films in den Zwischenraum zwischen zwei Elektroden und das Anlegen eines Strahls elektromagnetischer Wellen mit den Frequenzen von 27,12 MHz oder 40,68 MHz zwischen den beiden genannten Elektroden, wobei eine der beiden genannten Elektroden eine Form entsprechend dem Weg mit der voreingestellten Kontur besitzt.

6. Herstellungsverfahren für PVC-bezogene Einweghandschuhe nach Anspruch 5, wobei der Schritt des Ausübens von Druck auf den Pfad mit der voreingestellten Kontur umfasst: Antreiben einer der beiden Elektroden, um sich auf die andere zu zubewegen, und den Handschuhmaterial-Film zwischen die beiden Elektroden drücken.

7. Herstellungsverfahren für PVC-bezogene Einweghandschuhe nach Anspruch 1, wobei der Schritt des Ausübens von Druck auf den Weg mit der vorgegebenen Kontur umfasst:
Zulassen des Einspeisens des Handschuhmaterial-Films in den Zwischenraum zwischen einer stationären Schablone und einer beweglichen Schablone einer Stanzform, wobei eine der beiden Schablonen mit einer Metallform mit dem Weg mit der vorgegebenen Kontur montiert wird;
Antreiben der sich bewegenden Schablone zu einer Bewegung in Richtung der stationären Schablone, um den Handschuhmaterial-Film zwischen die beiden Schablonen zu drücken.

8. Herstellungsverfahren für PVC-bezogene Einweghandschuhe nach Anspruch 1, wobei der Schritt des Trennens des integral verschmolzenen Teils einschließlich des geschmolzenen Wegs von dem Handschuhmaterial-Film umfasst:
Halten des Handschuhmaterial-Films an Ort und Stelle und Ausüben eines Drucks oder einer Zugkraft senkrecht zu dem Handschuhmaterial-Film auf den integral verschmolzenen Teil einschließlich des verschmolzenen Wegs, so dass der integral verschmolzene Teil einschließlich des verschmolzenen Wegs von dem Handschuhmaterial-Film getrennt wird.

9. Herstellungsverfahren für PVC-bezogene Einweghandschuhe nach Anspruch 1, wobei das Verfahren ferner umfasst: Zählen der Anzahl von getrennten PVC-bezogenen Einweghandschuhen.

10. Herstellungsverfahren für PVC-bezogene Einweghandschuhe nach Anspruch 1, wobei der Weichmacher Dioctylphthalat und/oder Diisononylphthalat und/oder Dioctyl-Terephthalat und/oder 1,2-Cyclohexandicarboxylsäure-Isononylester enthält, wobei die Handschuhformelmischung 100 Gewichtsanteile von PVC-Harz oder seiner Mischung und 50 Gewichtsanteile oder mehr der genannten Weichmacher enthält.

## Revendications

1. Procédé de fabrication de gants jetables à base de PVC, dans lequel le procédé comprend les étapes suivantes :
le mélange d'une résine PVC ou de son mélange et d'un plastifiant pour former un mélange de formule de gant (101) ;
la transformation du mélange de formule de gant en un film de mélange (102) ;
le placement de deux couches de films de mélange en parallèle pour former un film de matériau de gant (103) ;
le placement d'une couche d'isolation sur un côté du film de matériau de gant, et l'application d'un faisceau d'ondes électromagnétiques réparties le long d'un chemin d'un contour préétabli sur la surface du film de matériau de gant, pour faire pénétrer le faisceau d'ondes électromagnétiques dans le film de matériau de gant et ainsi le film de matériau de gant est scellé efficacement le long du chemin du contour préétabli (104A) ; ou le chauffage du film de matériau de gant le long d'un chemin du contour préétabli, la température de chauffage étant supérieure ou égale au point critique de température de thermoscellage du film de matériau de gant, et ainsi le film de matériau de gant est thermoscellé efficacement le long du chemin du contour préétabli (104B) ;
l'application d'une pression sur le chemin du contour préétabli de sorte que les deux couches desdits films de mélange du film de matériau de gant soient pressées et fusionnées intégralement le long du chemin du contour préétabli (105) ;
la formation d'une découpe en forme de lame le long d'un bord extérieur du chemin du contour préétabli, et la séparation d'une partie fusionnée intégralement incluant un chemin fusionné vis-à-vis du film de matériau de gant, et la formation d'une ouverture à une position de poignet du chemin du contour préétabli, de façon à former un gant jetable à base de PVC (106) ;
l'étape de chauffage du film de matériau de gant le long du chemin du contour préétabli (104B) comprenant :
le chauffage du film de matériau de gant sur le chemin du contour préétabli à une température supérieure ou égale au point critique de température de thermoscellage du film de matériau de gant en 2 secondes, le maintien de la température pendant une période entre 0,05 seconde et 5,0 secondes avant l'arrêt du chauffage.

2. Procédé de fabrication de gants jetables à base de PVC selon la revendication 1, dans lequel, pendant l'application d'une pression sur le chemin du contour préétabli, le préchauffage du film de matériau de gant à une température ne dépassant pas 90 °C.

3. Procédé de fabrication de gants jetables à base de PVC selon la revendication 1, dans lequel l'étape de transformation du mélange de formule de gant en un film de mélange comprend la transformation du mélange de matériau de gant en un film de mélange en utilisant un procédé de laminage, un procédé de soufflage de feuille mince ou un procédé de moulage par absorption.

4. Procédé de fabrication de gants jetables à base de PVC selon la revendication 1, dans lequel le procédé comprend en outre :
la collecte de vapeur de plastifiant produite lors du procédé de transformation du mélange de formule de gant en un film de mélange ;
le refroidissement de la vapeur de plastifiant de façon à former des gouttelettes de plastifiant ;
la récupération des gouttelettes de plastifiant au moyen d'un séparateur électrostatique.

5. Procédé de fabrication de gants jetables à base de PVC selon la revendication 1, dans lequel l'étape d'application d'un faisceau d'ondes électromagnétiques sur la surface du film de matériau de gant comprend :
l'apport du film de matériau de gant dans l'espace entre deux électrodes, et l'application d'un faisceau d'ondes électromagnétiques avec les fréquences de 27,12 MHz ou 40,68 MHz entre lesdites deux électrodes, et l'une desdites deux électrodes possède une forme correspondant au chemin du contour préétabli.

6. Procédé de fabrication de gants jetables à base de PVC selon la revendication 5, dans lequel l'étape d'application de pression sur ledit chemin du contour préétabli comprend :
l'entraînement de l'une des deux électrodes en déplacement vers l'autre, et la pression du film de matériau de gant entre les deux électrodes.

7. Procédé de fabrication de gants jetables à base de PVC selon la revendication 1, dans lequel l'étape d'application de pression sur ledit chemin du contour préétabli comprend :
l'autorisation d'apport du film de matériau de gant dans l'espace entre un gabarit immobile et un gabarit mobile d'un moule d'estampage, et l'un des deux gabarits est monté avec un moule en métal avec le chemin du contour préétabli ;
l'entraînement du gabarit mobile en déplacement vers le gabarit immobile de façon à presser le film de matériau de gant entre les deux gabarits.

8. Procédé de fabrication de gants jetables à base de PVC selon la revendication 1, dans lequel l'étape de séparation de la partie fusionnée intégralement incluant un chemin fusionné vis-à-vis du film de matériau de gant comprend :
le maintien du film de matériau de gant en place, et l'application d'une pression ou d'une force de traction verticalement par rapport au film de matériau de gant sur la partie fusionnée intégralement incluant un chemin fusionné, de façon à séparer la partie fusionnée intégralement incluant le chemin fusionné vis-à-vis du film de matériau de gant.

9. Procédé de fabrication de gants jetables à base de PVC selon la revendication 1, dans lequel le procédé comprend en outre :
le comptage du nombre de gants jetables à base de PVC séparés.

10. Procédé de fabrication de gants jetables à base de PVC selon la revendication 1, dans lequel le plastifiant comporte du phtalate de dioctyle et/ou du phtalate de diisononyle et/ou du téréphtalate de dioctyle et/ou de l'ester d'isononyle d'acide 1,2-cyclohexane dicarboxylique ;
ledit mélange de formule de gant comporte 100 parties en poids de résine PVC ou de son mélange, et 50 parties en poids ou plus desdits plastifiants.
